# FASCICULE DE BREVET EUROPEEN

(11) **EP 2 641 706 B1**
(45) Date de publication et mention de la délivrance du brevet: **27.07.2016**
(21) Numéro de dépôt: 13290048.1
(22) Date de dépôt: 11.03.2013
(51) Int. Cl.: B26D 1/00, B02C 18/20, B21D 53/64, B23P 15/28

(54) **Procédé de réalisation d'une lame de coupe et installation de mise en oeuvre d'un tel procédé**
Herstellungsverfahren eines Schneideblatts, und Anlage zur Ausführung dieses Verfahrens
Method for manufacturing a cutting blade and facility for implementing such a method

(30) Priorité: 23.03.2012 FR 1200876
(43) Date de publication de la demande: 25.09.2013
(73) Titulaire: ADIAMAS, FR-63550 Palladuc (FR)
(72) Inventeur: Ronze, Fabien, 63350 Bulhon (FR); Janvier, Patrick, 63190 Lezoux (FR)
(74) Mandataire: Orsini, Fabienne

(56) Documents cités:
- DE-A1- 2 757 353
- DE-A1- 2 831 690
- DE-A1- 4 138 025
- DE-A1- 10 108 018
- DE-A1- 19 708 268
- DE-U1- 20 317 848
- DE-U1- 29 815 906
- FR-A- 1 490 642
- FR-A- 1 521 634
- FR-A1- 2 565 883
- FR-A1- 2 907 362
- NL-A- 6 918 968
- US-A- 3 741 046
- US-A- 5 097 727

## Description

La présente invention concerne un procédé de réalisation d'une denture crantée d'une lame de coupe.

Elle concerne en outre une installation pour la mise en oeuvre d'un tel procédé.

L'invention trouve une application particulièrement avantageuse dans la réalisation de lames pour robots ménagers ou de lames de couteaux traditionnelles.

### ARRIERE-PLAN TECHNOLOGIQUE

On connaît des lames de coupe simples comprenant une série de dents espacées d'un pas régulier le long d'un bord de coupe.

On connaît également des lames de coupe complexes comprenant deux séries de dents superposées dont la forme et le pas d'espacement sont différents.

Ces lames de coupe sont généralement adaptées à la réalisation d'un seul type de coupe.

En effet, pour couper, émincer, ou encore hacher un aliment, l'usager doit utiliser différentes lames de coupe spécifiquement adaptées aux opérations de coupe ou de hachage.

Toutefois, les lames de coupe actuelles destinées à la réalisation d'un type de coupe particulier ne permettent pas d'obtenir un résultat de coupe optimum quel que soit l'aliment à traiter.

Par ailleurs, pour réaliser une denture crantée sur une lame de coupe telle que précitée, on utilise usuellement une meule de forme ou de crantage dont la surface abrasive comporte le négatif de la denture crantée à apposer sur la lame de coupe.

Ainsi, préalablement à l'opération de crantage de la lame de coupe, le négatif de denture à réaliser est apposé par enlèvement de matière sur la surface abrasive de la meule de forme à l'aide d'une molette en diamant ou en carbure.

Le crantage de chaque lame de coupe peut être réalisé de deux manières différentes.

Soit la lame de coupe est maintenue fixe et la meule de forme mobile exerce une pression d'usinage sur le bord de la lame afin d'enlever la matière de la lame.

Soit la meule de forme est fixe et le bord de la lame de coupe est alors appliqué sur la surface abrasive de la meule de façon à enlever la matière correspondante de la lame.

Dans ces deux configurations, lorsque la lame de coupe présente un bord de coupe qui n'est pas rectiligne, on peut soit utiliser une meule de forme cylindrique de révolution, il faut alors faire tourner la lame en fonction du rayon de son bord de coupe, soit utiliser une meule de forme qui reprend les rayon et forme de la lame de coupe de sorte que la lame entre dans la meule de forme en suivant un trajet rectiligne.

Enfin, on connait déjà des documents US5097727 et EP0313344 un procédé de réalisation d'une denture crantée sur une lame de coupe circulaire, selon lequel on emboutit une lame de coupe déjà légèrement biseautée pour former en relief, sur un bord, une série de crans espacés d'un pas régulier, puis on meule une face crantée de la lame de coupe pour affûter la denture crantée.

Toutefois, Ici, outre le fait que l'on biseaute la lame avant de la positionner entre le poinçon et la matrice du dispositif d'emboutissage, il n'est pas prévu de réaliser une denture à pas variable.

### OBJET DE L'INVENTION

Par rapport à l'état de la technique précité, la présente invention propose un nouveau procédé de réalisation d'une lame de coupe qui permet d'obtenir un résultat de coupe optimum de façon reproductible quel que soit l'aliment traité.

Plus particulièrement, on propose selon l'invention un procédé conforme aux revendications 1 à 11.

L'invention propose également une installation de mise en oeuvre du procédé de réalisation d'une denture crantée sur une lame de coupe conforme à l'invention, qui comprend un dispositif d'emboutissage comportant une presse en deux parties portant, d'une part, les empreintes d'un crantage à apposer sur le bord d'une lame de coupe, et, d'autre part, une empreinte de forme pour conformer ladite lame de coupe, ainsi qu'une meule d'affûtage présentant une surface plane abrasive adaptée à s'appliquer contre une face crantée de la lame de coupe pour enlever de la matière entre lesdits crans et affûter la denture crantée de la lame de coupe.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'une lame de coupe réalisée à l'aide du procédé conforme à l'invention ;
- la figure 2 est une vue schématique de dessus de la lame de coupe de la figure 1 ;
- la figure 3 est une vue schématique de dessous de la lame de coupe de la figure 1 ;
- la figure 4 est une vue schématique de dessus d'une variante de la lame de coupe de la figure 2 dans laquelle la lame de coupe comprend deux bras de coupe ;
- la figure 5 est une vue schématique en perspective d'une autre lame de coupe réalisée à l'aide du procédé conforme à l'invention comprenant un motif de dents ;
- la figure 6 est une vue schématique de dessus de la lame de coupe de la figure 5 ;
- la figure 7 est une vue schématique de dessus d'une autre lame de coupe réalisée à l'aide du procédé conforme à l'invention ;
- la figure 8 est une vue schématique en perspective d'une autre lame de coupe réalisée à l'aide du procédé conforme à l'invention ;
- la figure 9 est une vue schématique de dessus de la lame de coupe de la figure 8.

En préliminaire on notera que d'une figure à l'autre, les éléments identiques ou similaires des différents modes de réalisation de la lame de coupe, seront dans la mesure du possible, référencés par les mêmes signes de référence et ne seront pas décrits à chaque fois.

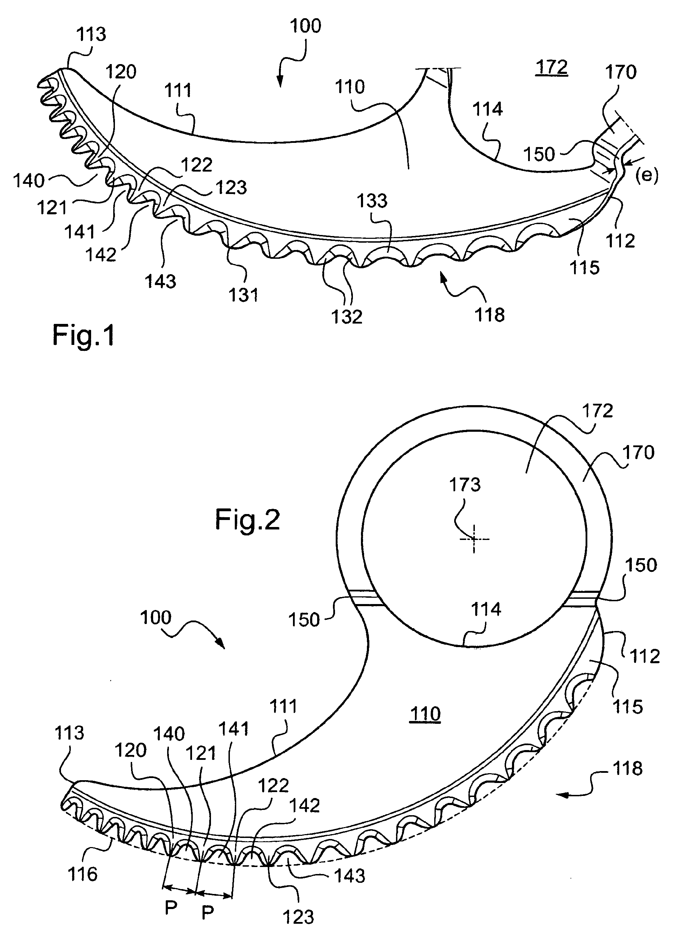

Sur les figures 1 à 9, on a représenté une lame de coupe 100 comprenant un bord de coupe courbe.

Cette lame de coupe 100 est avantageusement une lame d'un robot ménager et elle est destinée à couper, émincer, ou encore hacher tous types d'aliments durs, mous, lourds ou légers.

Cette lame de coupe peut se présenter sous la forme d'un disque, la forme d'une cartouche sensiblement rectangulaire, d'une lame avec un ou deux bras de coupe, ou encore sous différentes formes connues de l'homme du métier.

Elle est réalisée en matériau métallique comme de l'acier et elle peut être traitée thermiquement. Le nombre et les caractéristiques des traitements thermiques de la lame de coupe 100 dépendent de l'utilisation à laquelle elle est destinée et donc de l'acier utilisé.

Ces traitements thermiques peuvent être réalisés en four, sous vide, au tapis, par flamme, par induction ou à l'aide d'un laser. Généralement, on réalise tout d'abord une trempe puis entre un et trois revenus.

Ici, la lame de coupe 100 est avantageusement réalisée en acier inoxydable du type martensitique.

Des aciers inoxydables des types austénitiques ou ferritiques peuvent être également utilisés.

Elle peut également être réalisée dans des matériaux plastiques ou en céramique.

Selon les exemples représentés sur les figures 1 à 9, cette lame de coupe 100 présente un logement traversant 172 circulaire de centre 173 destiné à accueillir un arbre d'entrainement en rotation d'un robot ménager suivant une axe perpendiculaire à la lame de coupe 100.

La lame de coupe 100 comprend un ou deux bras de coupe 114.

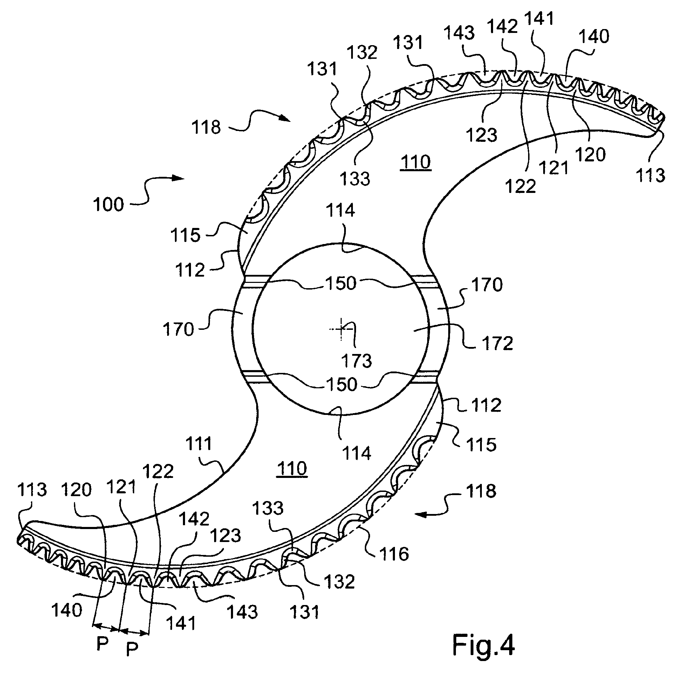

Selon les exemples représentés sur les figures 1 à 3 et 5 à 9, la lame de coupe 100 comprend un bras de coupe 114 unique alors que selon l'exemple représenté sur la figure 4, la lame de coupe 100 comprend deux bras de coupe 114 s'étendant de part et d'autre du logement traversant 172 de manière que la lame de coupe 100 forme globalement un « S ».

Selon les exemples représentés sur les figures 1, 5 et 8, l'épaisseur « e » de la lame de coupe 100 est constante. Cette épaisseur est ici comprise entre 0,1 millimètres et 5 millimètres.

Avantageusement, l'épaisseur « e » de la lame de coupe 100 est de 1 millimètre.

La lame de coupe 100 comprend ici une partie centrale surélevée 170 par rapport au bras de coupe 114, pourvue du logement traversant 172.

Ainsi, la lame de coupe 100 présente une forme globale en escalier formée par au moins un bras de coupe 114, la partie centrale surélevée 170 et une partie de jonction 150 destinée à réaliser une jonction entre le bras de coupe 114 et la partie centrale surélevée 170.

Chaque bras de coupe 114 comporte deux bords courbes 111, 112 qui se rejoignent à l'une de leurs extrémités pour former une pointe 113 arrondie.

L'un des bords courbes 112, dit bord externe 112, présente un rayon de courbure supérieur au rayon de courbure de l'autre bord courbe 111, dit bord interne 111 du bras de coupe 114.

Le bord externe 112 de chaque bras de coupe 114 présente une série de dents 120, 121, 122, 123 ; 220, 221, 222, 223 ; 320 sur un biseau 115 définissant ensemble une denture crantée 118 de la lame de coupe 100.

Comme le montrent plus particulièrement les figures 2, 3, 4, 7 et 9, le bord externe 112 portant la denture crantée 118 constitue le bord de coupe 116 de chaque bras de coupe 114 de la lame de coupe 100.

Ainsi, le bord de coupe 116 comprenant la denture crantée 118 s'étend sur une distance supérieure à 15 millimètres et préférentiellement sur une distance supérieure ou égale à 20 millimètres.

Comme le montrent les figures 2 à 4 et 6 à 9, les dents 120, 121, 122, 123 ; 220, 221, 222, 223 ; 320, de la denture crantée 118 sont espacées entre elles d'un pas P ; P1', P2' ; P".

Le pas P ; P1', P2' ; P" d'espacement des dents dépend de l'utilisation de la lame de coupe 100, il peut varier entre 1 millimètre et 50 millimètres.

Comme le montrent plus particulièrement les figures 1 à 3 et 5 à 9, chaque dent 120, 121, 122, 123 ; 220, 221, 222, 223 ; 320 comprend un sommet 131 ; 331 à la jonction de deux côtés latéraux 132 ; 332 d'une dent.

Les sommets 131 des dents 120, 121, 122, 123; 220, 221, 222, 223; 320 de la denture crantée 118 sont adjacents au bord de coupe 116.

L'espace formé entre deux sommets 131 ; 331 de deux dents 120, 121, 122, 123 ; 220, 221, 222, 223 ; 320 successives forme un cran 140, 141, 142, 143, 240, 241 ; 340.

La denture crantée 118 comprend une série de dents et une série de crans en alternance.

Le fond de chaque cran 140, 141, 142, 143, 240, 241 ; 340 forme un creux 133 ; 333 à la jonction des côtés latéraux 132 ; 332 de deux dents 120, 121, 122, 123 ; 220, 221, 222, 223 ; 320 successives.

La denture crantée 118 comprend ainsi une pluralité de crans 140, 141, 142, 143, 240, 241 ; 340, réalisée par une opération d'emboutissage décrite plus en détail par la suite, sur la face de dessus 110 du bras de coupe 114, dite face crantée 110.

La denture crantée 118 de la lame de coupe 100 est présente sur le biseau 115 qui est également réalisée par l'opération d'emboutissage.

Selon une caractéristique particulièrement avantageuse de la lame de coupe 100 représentée sur les figures 1 à 7, les dents 120, 121, 122, 123 ; 220, 221, 222, 223 se succèdent suivant un pas qui varie le long du bord courbe 112.

Selon une autre caractéristique particulièrement avantageuse de la lame de coupe 100, la denture crantée 118 comprend au moins deux formes différentes de dents 120, 121, 122, 123 ; 220, 221, 222, 223.

Ainsi, selon l'exemple représenté sur les figures 1 à 4, partant de la pointe 113 de chaque bras de coupe 114, le pas P séparant deux dents 120 et 121 successives est inférieur au pas P séparant les dents 121 et 122 suivantes.

Plus particulièrement, selon l'exemple représenté sur les figures 1 à 4, le pas P séparant deux dents 120, 121, 122, 123 successives le long de la denture crantée 118 est croissant de la pointe 13 du bras de coupe 114 vers le logement traversant 172 de la lame de coupe 100.

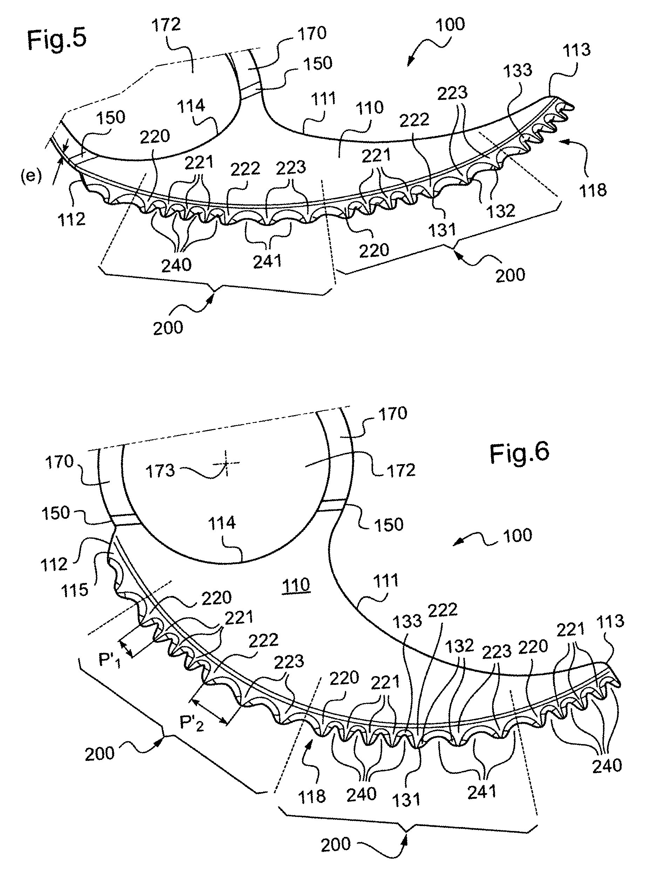

Selon l'exemple représenté sur les figures 5 à 7, la denture crantée 118 de la lame de coupe 100 comprend un motif 200 ; 250 de dents se répétant un certain nombre de fois entre les deux extrémités de la denture crantée 118.

Avantageusement, ledit motif 200 ; 250 de dents comprend une pluralité de dents 220, 221, 222, 223 et au moins deux pas P1', P2' différents.

Selon une caractéristique avantageuse de la lame de coupe 100, le motif 200 ; 250 de dents comprend une série de petites dents 221 séparées du premier pas P1' et une série de grandes dents 223 séparées du deuxième pas P2' supérieur au premier pas P1'.

Les séries de petites dents 221 et de grandes dents 223 sont reliées par au moins deux dents de transition 220, 221 de forme différentes entre elles.

Selon l'exemple représenté sur les figures 5 à 7, le motif 200 ; 250 de dents comprend au moins une grande dent 223, une petite dent 221 et deux dents de transition 220, 222 qui font la jonction entre une grande dent 223 et une petite dent 221.

Le pas séparant une dent de transition 220, 222 d'une grande dent 223 successive correspond au pas P2' séparant deux grandes dents 223 successives.

Le pas séparant une dent de transition 220, 222 d'une petite dent 221 successive correspond au pas P1' séparant deux petites dents 221 successives.

Ici, le pas P1', séparant deux petites dents 221 successives, est avantageusement égal à 3 millimètres et le pas P2', séparant deux grandes dents 223 successives, est égal à 5 millimètres.

Le motif 200 de dents de la lame de coupe représentée sur les figures 5 et 6, comprend quatre formes différentes de dents 220, 221, 222, 223. Les petites dents 221 et les grandes dents 223 sont symétriques par rapport à un axe passant par leur sommet 131 et par le milieu de chacune d'entre elles.

Les deux dents de transition 220, 222 du motif 200 de dents sont images l'une de l'autre dans un miroir.

En effet, elles comprennent chacune une moitié d'une grande dent 223 et une autre moitié d'une petite dent 221.

Comme le montrent plus particulièrement les figures 5 et 6, chaque motif 200 de dents comprend un total de sept dents, soit, successivement, une dent de transition 220, une série de trois petites dents 221, une autre dent de transition 222 et une série de deux grandes dents 223.

Comme le montrent également les figures 5 et 6, le motif 200 de dents comprend au moins deux crans 240, 241 de formes différentes, de manière à ce que la denture crantée 118 comporte une alternance d'une série de quatre crans 240 d'une même forme et d'une série de trois autres crans 241 de formes différentes.

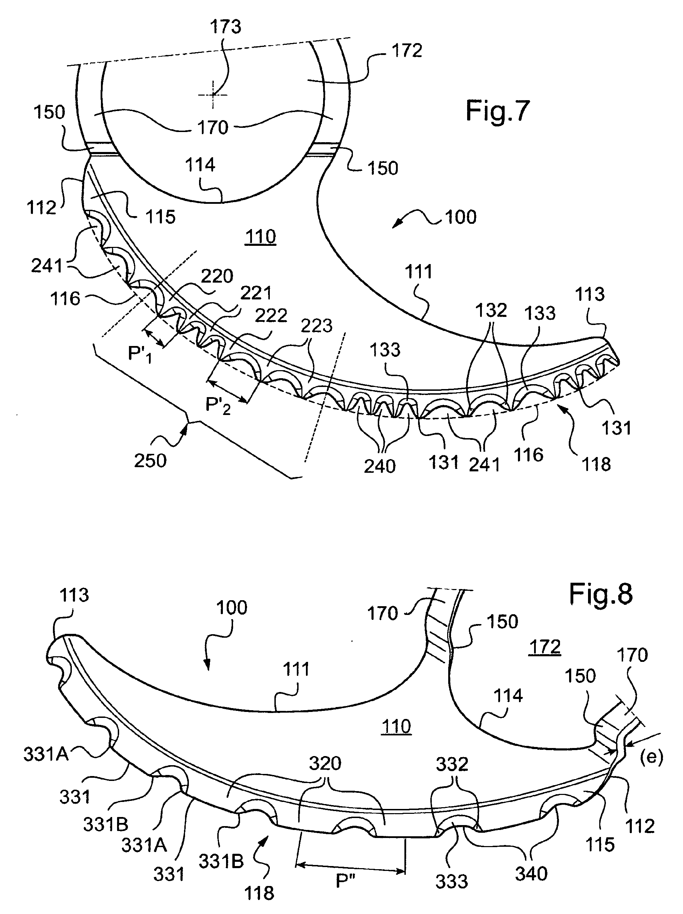

La lame de coupe 100 représentée sur la figure 7 comprend un motif 250 similaire au motif 200 des figures 5 et 6 dans lequel la série de petites dents 221 comprend une petite dent 221 en moins.

Ainsi, ce motif de dents 250 comprend un total de six dents, soit, successivement, une dent de transition 220, une série de deux petites dents 221, une autre dent de transition 222 et une série de deux grandes dents 223.

Bien entendu, on peut prévoir, selon une variante de réalisation non-représentée, que le nombre, la forme et le pas d'espacement des dents des motifs de dents précités soient différents.

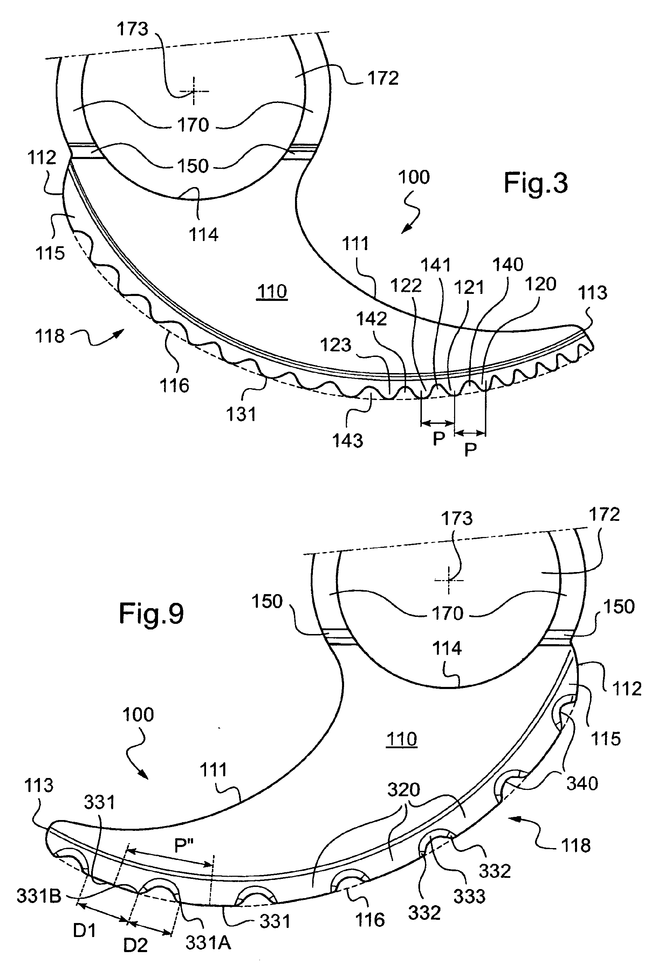

Selon l'exemple représenté sur les figures 8 et 9, la lame de coupe 100, comporte sur son bord externe 112 courbe, une denture crantée 118 comprenant une seule série de dents 320 espacées d'un pas P" régulier.

Avantageusement, chaque dent 320 comprend un sommet 331 allongé suivant un arc de cercle à très grand rayon de courbure, longeant le bord externe 112 sur une distance déterminée D1.

Ici, le rayon de courbure de chaque arc de cercle correspond au rayon de courbure du bord externe 112 de la lame de coupé 100 qui peut être compris entre 20 millimètres et 100 millimètres.

Selon une autre caractéristique de la lame de coupe 100 représentée sur les figures 8 et 9, la distance déterminée D1 sur laquelle s'étend le sommet 331 de chaque dent 320 est supérieure ou égale à la différence entre le pas P" séparant deux dents 320 successives et la distance D2, séparant les extrémités successives 331A, 331 B de deux sommets de deux dents 320 de la denture crantée 118.

Comme le montrent plus particulièrement les figures 8 et 9, la denture crantée 118 comprend ici six dents 320 et sept crans 340 répartis alternativement entre les deux extrémités de la denture crantée 118.

Toutes les dents 320 ont ici une forme identique le long du bord externe 112.

Tous les crans 340 ont ici une forme identique le long du bord externe 112.

Les lames de coupe 100 présentées dans les figures 1 à 9 sont toutes avantageusement réalisées de manière précise et industrielle selon un procédé de fabrication comprenant tout d'abord une première opération d'emboutissage, puis une seconde opération de meulage pouvant être réalisées en une ou plusieurs passes.

En d'autres termes, ces lames de coupe 100 complexes sont aisément réalisées à un faible coût de manière reproductible par ce procédé de fabrication.

Pour réaliser les lames de coupe 100 représentées sur les figures 1 à 7, selon le procédé conforme à l'invention, on emboutit la lame de coupe 100 pour former en relief sur un de ses bords courbes 111, 112 une série de crans 140, 141, 142, 143 ; 240 espacés d'un pas qui varie le long d'un bord de coupe 116.

Ainsi, on réalise sur les lames de coupe une denture crantée 118 qui comprend au moins deux formes différentes de dents 120, 121, 122, 123 ; 220, 221, 222, 223.

Pour les lames de coupe représentées sur les figures 1 à 4, lors de l'opération d'emboutissage, on réalise une denture crantée dans laquelle le pas P qui sépare deux dents 120, 121 successives est croissant le long du bord courbe 112 d'une extrémité à l'autre de la denture crantée 118.

Pour les lames de coupe représentées sur les figures 5 à 7, lors de l'opération d'emboutissage, on réalise une denture crantée 118 qui comprend un motif 200 250 de dents se répétant un certain nombre de fois entre les deux extrémités de la denture crantée 118, ledit motif 200 ; 250 de dents comprenant une pluralité de dents 220, 221, 222, 223 et au moins deux pas P1', P2' différents.

Plus particulièrement, pour les lames de coupe représentées sur les figures 6 et 7, lors de l'opération d'emboutissage, on réalise une denture crantée dans laquelle le motif 200 ; 250 de dents comprend une série de petites dents 221 séparées d'un premier pas P1'et une série de grandes dents 223 séparées d'un deuxième pas P2' supérieur au premier pas P1'.

Pour réaliser les lames de coupe 100 représentées sur les figures 8 et 9, selon le procédé conforme à l'invention, on emboutit la lame de coupe 100 pour former en relief sur un de ses bords courbes 111, 112 une série de crans 340 espacés d'un pas P" régulier le long d'un bord de coupe 116.

Ici, plus particulièrement, on emboutit la lame de coupe 100 brute pour former en relief, sur son bord courbe 112, une série de crans espacés d'un pas régulier avec entre chaque cran une dent 320 qui comprend un sommet 331 allongé suivant un arc de cercle à très grand rayon de courbure, longeant le bord courbe 112 sur une distance déterminée D1. Préférentiellement, lors de l'opération d'emboutissage on réalise une denture crantée 118 dans laquelle la distance déterminée D1 des sommets 331 des dents est supérieure ou égale à la différence entre le pas P" séparant deux dents 320 successives et la distance D2 séparant les extrémités successives de deux sommets 331 de deux dents 320.

L'emboutissage de la lame de coupe 100 brute est réalisé au moyen d'un dispositif d'emboutissage qui comprend une presse en deux parties. Chaque partie de la presse comporte sur sa face intérieure de travail les empreintes de la denture crantée 118 ou une partie seulement de cette denture crantée 118 à apposer sur le bord courbe 112 correspondant de la lame de coupe 100 ainsi qu'une empreinte de forme pour conformer ladite lame de coupe 100.

D'ailleurs, à l'aide du dispositif d'emboutissage, lors de l'opération d'emboutissage, on découpe la lame de coupe 100 à la forme souhaitée.

Ici, les deux parties de la presse sont des matrices de forme.

Ainsi, la lame de coupe 100 brute est disposée entre les deux matrices de forme de la presse qui se referment sur elle pour l'emboutir et la conformer à la forme souhaitée.

Comme le montrent les figures 1 à 9, la denture crantée 118 est imprimée sur une unique face crantée 110 de la lame de coupe 100.

Selon une caractéristique avantageuse de l'invention, l'opération d'emboutissage est réalisée en une ou plusieurs passes successives sur la lame de coupe 100 pour former en relief sur un de ses bords courbes une série de crans 140, 141, 142,143 ; 240, 241 ; 340 espacés.

Ici, à la sortie de l'opération d'emboutissage, la lame de coupe 100 présente ainsi un biseau 115 sur le bord courbe 112. Ce biseau 115 est d'une inclinaison comprise entre 10 degrés et 45 degrés. Ici, l'inclinaison du biseau 115 est avantageusement de 20 degrés.

Préférentiellement, après l'opération d'emboutissage de la lame de coupe 100, on traite thermiquement la lame de coupe 100 emboutie.

Le traitement thermique réalisé peut être un de ceux précédemment décrits, de manière à durcir la lame de coupe 100 emboutie.

Après l'opération de traitement thermique, on meule une face crantée 110 de la lame de coupe 100 à l'aide d'une surface plane abrasive pour affûter la denture crantée 118. Lors de l'opération de meulage on enlève de la matière sur toute la surface de la lame, le long du bord de coupe, et donc, on enlève de la matière entre lesdits crans 140, 141, 142, 143, 240, 241, 340. L'opération de meulage à plat est réalisée en une seule passe sur la seule face crantée 110 de la lame de coupe 100.

On entend par « meulage à plat », soit un meulage selon lequel le plan d'attaque est parallèle à la face crantée 110 pour former le biseau 115, soit un meulage selon lequel le plan d'attaque est incliné par rapport à la face crantée 110 pour former un double biseau.

La lame de coupe 100 comprend alors une denture crantée 118, affûtée sur la face crantée 110 de son bras de coupe 114.

Avantageusement, l'opération de meulage à plat est réalisée en une seule passe sur l'unique face crantée 110 de la lame de coupe 100.

Après l'opération de meulage à plat de la lame de coupe 100, on peut avantageusement effectuer un traitement de surface de la lame de coupe 100.

En particulier, le traitement de surface peut consister à appliquer un revêtement par dépôt-vapeur sous vide qui améliore les propriétés de glissement de la lame, sa dureté superficielle et qui fait barrière thermique augmentant également la résistance des arêtes de coupe.

Ici, le traitement de surface est un polissage électrochimique.

Selon le procédé conforme à l'invention, il peut être prévu également une opération de finition de la lame de coupe qui dépend de la gamme de produit et des besoins de l'utilisateur.

La présente invention n'est nullement limitée au mode de réalisation décrit et représenté, mais l'homme du métier saura y apporter toute variante conforme à son esprit.

On peut prévoir suivant une variante de réalisation non-représentée, que la lame de coupe comporte un biseau sur chacun des bords courbes de la lame de coupe.

Selon une autre variante de réalisation non-représentée, on peut prévoir, que le motif comprend des dents de formes différentes pour un même pas. Par exemple, les côtés longitudinaux des dents peuvent avoir une longueur qui varie le long du bord de coupe pour un même pas de dents ou les creux des crans peuvent être de formes différentes.

## Revendications

1. Procédé de réalisation d'une denture crantée (118) sur une lame de coupe (100) qui comporte sur un bord courbe (112), **caractérisé en ce qu'**on emboutit la lame de coupe (100) brute non biseauté d'épaisseur e constante pour former un biseau (115) sur son bord courbe (112) d'inclinaison comprise entre 10 degrés et 45 degrés, et, en relief, sur son bord courbe (112), une série de crans (140, 141, 142, 143 ; 240, 241) espacés d'un pas qui varie le long d'un bord de coupe (116) de manière à obtenir une denture crantée (18) avec une seule série de dents (120, 121, 122, 123 ; 220, 221, 223) qui se succèdent suivant un pas qui varie le long du bord courbe, puis on meule une face crantée (110) de la lame de coupe (100) à l'aide d'une surface plane abrasive pour affûter la denture crantée (118).

2. Procédé selon la revendication 1, selon lequel lors de l'opération d'emboutissage, on découpe la lame de coupe (100) à la forme souhaitée.

3. Procédé selon l'une des revendications 1 et 2, selon lequel l'opération d'emboutissage est réalisée en une ou plusieurs passes successives sur la lame de coupe (100) pour former en relief sur un de ses bords courbes une série de crans (140, 141, 142, 143 ; 240, 241 ; 340) espacés.

4. Procédé selon l'une des revendications 1 à 3, selon lequel après l'opération d'emboutissage de la lame de coupe (100), on traite thermiquement la lame de coupe (100).

5. Procédé selon l'une des revendications 1 à 4, selon lequel après l'opération de meulage à plat de la lame de coupe (100), on effectue un traitement de surface sur la lame de coupe (100).

6. Procédé selon l'une des revendications précédentes, selon lequel, lors de l'opération d'emboutissage, on réalise une denture crantée (118) qui comprend au moins deux formes différentes de dents (120, 121, 122, 123 ; 220, 221, 222, 223).

7. Procédé selon l'une des revendications précédentes, selon lequel, lors de l'opération d'emboutissage, on réalise une denture crantée dans laquelle le pas (P) qui sépare deux dents (120, 121) successives est croissant le long du bord courbe (112) d'une extrémité à l'autre de la denture crantée (118).

8. Procédé selon l'une des revendications précédentes, selon lequel, lors de l'opération d'emboutissage, on réalise une denture crantée (118) qui comprend un motif (200 ; 250) de dents se répétant un certain nombre de fois entre les deux extrémités de la denture crantée (118), ledit motif (200 ; 250) de dents comprenant une pluralité de dents (220, 221, 222, 223) et au moins deux pas (P1', P2') différents.

9. Procédé selon la revendication précédente, selon lequel, lors de l'opération d'emboutissage, on réalise une denture crantée dans laquelle le motif (200 ; 250) de dents comprend une série de petites dents (221) séparées d'un premier pas (P1') et une série de grandes dents (223) séparées d'un deuxième pas (P2') supérieur au premier pas (P1').

10. Procédé de réalisation d'une denture crantée (118) sur une lame de coupe (100) qui comporte sur un bord courbe (112), **caractérisé en ce qu'**on emboutit la lame de coupe (100) brute non biseautée d'épaisseur e constante pour former un biseau (115) sur son bord courbe (112) d'inclinaison comprise entre 10 degrés et 45 degrés, et, en relief, sur son bord courbe (112), une série de crans espacés d'un pas régulier avec entre chaque cran une dent (320) qui comprend un sommet (331) allongé suivant un arc de cercle à très grand rayon de courbure, longeant le bord courbe (112) sur une distance déterminée (D1) qui est supérieure ou égale à la différence entre le pas (P") séparant deux dents (320) successives et la distance (D2) séparant les extrémités successives de deux sommets (331) de deux dents (320), puis on meule une face crantée (110) de la lame de coupe (100) à l'aide d'une surface plane abrasive pour enlever de la matière entre lesdits crans et affûter la denture crantée (118).

11. Installation de mise en oeuvre du procédé de réalisation d'une denture crantée (118) sur une lame de coupe (100) selon l'une des revendications 1 à 10, **caractérisée en ce qu'**elle comprend un dispositif d'emboutissage comportant une presse en deux parties portant, d'une part, les empreintes d'un crantage à apposer sur le bord d'une lame de coupe (100), et, d'autre part, une empreinte de forme pour conformer ladite lame de coupe(100), ainsi qu'une meule d'affûtage présentant une surface plane abrasive adaptée à s'appliquer contre une face crantée (110) de la lame de coupe (100) pour enlever de la matière entre lesdits crans (140, 141, 142, 143 ; 240, 241 ; 340) et affûter la denture crantée (118) de la lame de coupe (100).

## Patentansprüche

1. Herstellverfahren einer Verzahnung (118) an einer Schneidklinge (100), die an einem gewölbten Rand (112), **dadurch gekennzeichnet, dass** man die unbearbeitete, nicht abgeschliffene Schneidklinge (100) mit einer konstanten Stärke e presst, um an ihrem gewölbten Rand (112) eine Fase (115) mit einer Neigung zwischen 10 und 45 Grad zu bilden, und an ihrem gewölbten Rand (112) hervorgehoben eine Reihe von Einschnitten (140, 141, 142, 143, 240, 241) umfasst, die jeweils um eine Zahnteilung beabstandet sind, die entlang einem Klingenrand (116) derart variiert, dass eine Verzahnung (118) mit einer einzigen Zahnreihe (120, 121, 122, 123, 220, 221, 223) erzielt wird, deren Zähne sich entlang des gewölbten Randes gemäß einer sich ändernden Zahnteilung folgen, sowie dass man eine gezahnte Seite (110) der Schneidklinge (100) mithilfe einer ebenen Schleiffläche abschleift, um die Verzahnung (118) zu schärfen.

2. Verfahren nach Anspruch 1, bei dem man beim Pressvorgang die Schneidklinge (100) in der gewünschten Form zuschneidet.

3. Verfahren nach einem der Ansprüche 1 und 2, bei dem der Pressvorgang in einer oder mehreren nacheinander folgenden Schnittlinien auf der Schneidklinge (100) realisiert wird, um auf einem ihrer gewölbten Ränder eine Reihe von hervorgehobenen, beabstandeten Einschnitten (140, 141, 142, 143, 240, 241, 340) zu bilden.

4. Verfahren nach einem der Ansprüche 1 bis 3, bei dem man die Schneidklinge (100) nach dem Pressvorgang der Schneidklinge (100) einer Wärmebehandlung unterzieht.

5. Verfahren nach einem der Ansprüche 1 bis 4, bei dem man nach dem flachen Schleifvorgang der Schneidklinge (100) auf der Schneidklinge (100) eine Oberflächenbehandlung vornimmt.

6. Verfahren nach einem der vorausgehenden Ansprüche, bei dem man während des Pressvorgangs eine Verzahnung (118) realisiert, die mindestens zwei verschiedene Zahnformen (120, 121, 122, 123, 220, 221, 222, 223) umfasst.

7. Verfahren nach einem der vorausgehenden Ansprüche, bei dem man während des Pressvorgangs eine Verzahnung (118) realisiert, bei der die Zahnteilung (P) zwischen zwei nacheinander folgenden Zähnen (120, 121) entlang des gewölbten Randes (112) von einem Ende der Verzahnung (118) bis zum anderen zunehmend ist.

8. Verfahren nach einem der vorausgehenden Ansprüche, bei dem man während des Pressvorgangs eine Verzahnung (118) realisiert, die ein sich eine bestimmte Anzahl wiederholendes Zahnmuster (200; 250) zwischen den zwei Enden der Verzahnung (118) umfasst, wobei dieses Zahnmuster (200; 250) eine Vielzahl von Zähnen (220, 221, 222, 223) und mindestens zwei unterschiedliche Zahnteilungen (P1', P2') umfasst.

9. Verfahren nach vorausgehendem Anspruch, bei dem man während des Pressvorgangs eine Verzahnung realisiert, deren Zahnmuster (200; 250) eine Reihe von kleinen Zähnen (221) umfasst, die um eine erste Zahnteilung (P1') voneinander getrennt sind, und eine Reihe von großen Zähnen (223), die um eine zweite Zahnteilung (P2') voneinander getrennt sind, die größer ist als die erste Zahnteilung (P1`).

10. Herstellverfahren einer Verzahnung (118) an einer Schneidklinge (100), die an einem gewölbten Rand (112), dadurch gekenntzeichnet, dass man die unbearbeitete, nicht abgeschliffene Schneidklinge (100) mit einer konstanten Stärke e presst, um an ihrem gewölbten Rand (112) eine Fase (115) mit einer Neigung zwischen 10 und 45 Grad zu bilden, und am gewölbten Rand (112) hervorgehoben eine Reihe von Einschnitten umfasst, die jeweils um eine regelmäßige Teilung beabstandet sind und zwischen jedem Einschnitt einen Zahn (320) umfassen, der eine gemäß einem Kreisbogen mit sehr großem Bogenradius längliche Spitze (331) umfasst, die am gewölbten Rand (112) auf einer bestimmten Distanz (D1) entlang verläuft, die größer gleich dem Unterscheid zwischen der Teilung (P") zwischen zwei nacheinander folgenden Zähnen (320) ist und wobei die Distanz (D2) die nacheinander folgenden Enden von zwei Spitzen (331) von zwei Zähnen (320) voneinander teilt, und man dann eine gezahnte Seite (110) der Schneidklinge (100) mithilfe einer ebenen Schleiffläche abschleift, um zwischen diesen Einschnitten eine spanende Bearbeitung vorzunehmen und die Verzahnung (118) zu schärfen.

11. Vorrichtung für die Anwendung des Herstellverfahrens einer Verzahnung (118) an einer Schneidklinge (100) nach einem der Ansprüche 1 bis 10, **dadurch gekennzeichnet, dass** sie eine zweiteilige Pressvorrichtung umfasst, die zum einen die Abdrücke einer auf dem Rand einer Schneidklinge (100) aufzubringenden Verzahnung und zum anderen einen Formabdruck umfasst, um die Schneidklinge (100) auszubilden, sowie eine Schleifvorrichtung mit einer ebenen Schleiffläche, die sich dazu eignet, gegen eine gezahnte Seite (110) der Schneidklinge (100) zum Aufliegen zu kommen, um zwischen den Einschnitten (140, 141, 142, 143, 240, 241, 340) eine spanende Bearbeitung vorzunehmen und die Verzahnung (118) der Schneidklinge (100) zu schärfen.

## Claims

1. A method of making notched teeth (118) on a cutting blade (100) that has a curved edge (112), the method being **characterized in that** the non-beveled unfinished cutting blade (100) of constant thickness e is stamped to form a bevel (115) on its curved edge (112) sloping at an angle lying in the range 10 degrees to 45 degrees, and to form, in relief on its curved edge (112), a series of notches (140, 141, 142, 143; 240, 241) that are spaced apart by a pitch that varies along a cutting edge (116) so as to obtain notched teeth (118) comprising a single series of teeth (120, 121, 122, 123; 220, 221, 223) that follow one another at a pitch that varies along the curved edge, and then the notched face (110) of the cutting blade (100) is ground with an abrasive plane surface in order to sharpen the notched teeth (118).

2. A method according to claim 1, wherein, during the stamping operation, the cutting blade (100) is cut to the desired shape.

3. A method according to claim 1 or claim 2, wherein the stamping operation is performed in one or more successive passes on the cutting blade (100) in order to form a series of spaced-apart notches (140, 141, 142, 143; 240, 241; 340) in relief in one of its curved edges.

4. A method according to any one of claims 1 to 3, wherein, after the operation of stamping the cutting blade (100), the cutting blade (100) is subjected to heat treatment.

5. A method according to any one of claims 1 to 4, wherein, after the operation of flat grinding the cutting blade (100), surface treatment is performed on the cutting blade (100).

6. A method according to any preceding claim, wherein, during the stamping operation, notched teeth (118) are made comprising teeth of at least two different shapes (120, 121, 122, 123; 220, 221, 222, 223).

7. A method according to any preceding claim, wherein, during the stamping operation, notched teeth are made in which the pitch (P) between successive pairs of teeth (120, 121) increases along the curved edge (112) from one end to the other of the notched teeth (118).

8. A method according to any preceding claim, wherein, during the stamping operation, notched teeth (118) are made comprising a tooth pattern (200; 250) that repeats a certain number of times between the two ends of the notched teeth (118), said tooth pattern (200; 250) comprising a plurality of teeth (220, 221, 222, 223) and having at least two different pitches (P1', P2').

9. A method according to the preceding claim, wherein, during the stamping operation, notched teeth are made in which the tooth pattern (200; 250) comprises a series of small teeth (221) spaced apart at a first pitch (P1'), and a series of large teeth (223) spaced apart by a second pitch (P2') greater than the first pitch (P1').

10. A method of making notched teeth (118) on a cutting blade (100) that has a curved edge (112), the method being **characterized in that** the non-beveled unfinished cutting blade (100) of constant thickness e is stamped to form a bevel (115) on its curved edge (112) sloping at an angle lying in the range 10 degrees to 45 degrees, and to form, in relief on its curved edge (112), a series of notches spaced apart by a regular pitch with, between notches, respective teeth (320) each comprising an elongate top (331) following a circular arc of very large radius of curvature, running along the curved edge (112) for a determined distance (D1) that is greater than or equal to the difference between the pitch (P") between two successive teeth (320) and the distance (D2) between the successive ends of two tops (331) of two teeth (320), and then a notched face (110) of the cutting blade (100) is ground using an abrasive plane surface to remove material between said notches and sharpen the notched teeth (118).

11. An installation for performing the method of making notched teeth (118) on a cutting blade (100) according to any one of claims 1 to 10, **characterized in that** it comprises a stamper device comprising a two-portion press carrying firstly impression cavities of notching to be applied to the edge of a cutting blade (100), and secondly an impression cavity for shaping said cutting blade (100), and also a sharpening grinder presenting an abrasive plane surface adapted to press against a notched face (110) of the cutting blade (100) in order to remove material between said notches (140, 141, 142, 143; 240, 241; 340) and sharpen the notched teeth (118) of the cutting blade (100).
